# EUROPÄISCHE PATENTANMELDUNG

(11) **EP 1 233 466 A2**
(43) Veröffentlichungstag der Anmeldung: **21.08.2002**
(21) Anmeldenummer: 02001579.8
(22) Anmeldetag: 23.01.2002
(51) Int. Cl.: H01M 8/04, B60K 11/02

(54) **System zur Kühlung einer Brennstoffzellenanlage**

(30) Priorität: 20.02.2001 DE 10107875
(71) Anmelder: Ballard Power Systems AG, 73230 Kirchheim / Teck-Nabern (DE)
(72) Erfinder: Derflinger, Monika, 73272 Neidlingen (DE); Haas, Isabel, 73230 Kirchheim (DE); Walz, Hans-Frieder, 73337 Bad Überkinger (DE)
(74) Vertreter: Kaufmann, Ursula Josefine, Dr.rer.nat. Dipl.-Phys.

(57) **Zusammenfassung**

Ein System dient zur Kühlung einer Brennstoffzellenanlage, insbesondere einer Brennstoffzellenanlage mit einem Gaserzeugungssystem in einem Kraftfahrzeug. In einem Kühlkreislauf zirkulierendes Kühlmittel durchströmt wenigstens einen Kühler (2), wenigstens eine Kühlmittelfördereinrichtung (3) und wenigstens eine weitere zu kühlende Komponente (5) außer der Brennstoffzelle (4). Der Kühlkreislauf weist wenigstens zwei Ventileinrichtungen (8,10) auf, welche jeweils einer der zu kühlenden Komponenten zugeordnet sind. Durch die Ventileinrichtungen ist eine Durchflussmenge des Kühlmittels durch die jeweils zu kühlende Komponente in Abhängigkeit der Temperatur in jeweils einem einer der Komponenten zugeordneten Bereich beeinflußbar.

## Beschreibung

Die Erfindung betrifft ein System zur Kühlung einer Brennstoffzellenanlage, insbesondere einer Brennstoffzellenanlage mit einem Gaserzeugungssystem in einem Kraftfahrzeug, mit einem in einem Kühlkreislauf zirkulierenden Kühlmittel.

Aus der DE 43 27 261 C1 ist es bekannt, ein Kühlsystem aufzubauen, welches für jedes Aggregat einen separaten Kühlkreislauf aufweist. Die separaten Kühlkreisläufe in dieser Schrift sind dabei über einen Wärmetauscher gekoppelt, welcher zur Beheizung der Fahrgastzelle eines mit dem entsprechenden Kühlsystem ausgerüsteten Kraftfahrzeugs vorgesehen ist.

Ein derartiges Kühlsystem weist jedoch den Nachteil auf, daß hier jeder der separaten Kühlkreisläufe über sämtliche Einrichtungen eines Kühlkreislaufs, wie beispielsweise Kühlmittelfördereinrichtung, Filter und dergleichen, verfügen muß. Der Aufwand bezüglich der Komponenten und des Platzbedarfs des Kühlsystems steigt also erheblich an.

Aus der EP 0 842 548 B1 ist ebenfalls ein Kühlsystem bekannt, welches hier insbesondere zum Kühlen eines Brennstoffzellensystems dient. Dieses Kühlsystem weist zur Verbesserung des Kaltstartverhaltens des Brennstoffzellensystems bzw. der Brennstoffzellenanlage eine über eine Ventileinrichtung steuerbare Bypassleitung um einen Kühler auf. Damit läßt sich der Kühlkreislauf ganz oder teilweise ohne den eigentlichen Kühler betreiben, so daß es zu einer sehr schnellen Aufheizung des in dem Kühlkreislauf zirkulierenden Kühlmittels kommt.

Einen ähnlichen Aufbau wie der des Kühlsystems gemäß der oben genannten Europäischen Patentschrift zeigt auch die JP 09320626 A, welche ebenfalls eine Bypassleitung um einen Kühler bzw. Wärmetauscher zeigt, welche durch ein in Abhängigkeit einer Temperatur steuerbares Ventil absperrbar ist.

Diese beiden Aufbauten weisen jedoch den Nachteil auf, daß sie zwar für ein sehr schnelles Aufheizen des gesamten Kühlkreislaufs geeignet sind, aber in dem gesamten Kühlkreislauf kann jeweils nur ein Temperaturniveau herrschen, da sämtliche zu kühlenden Komponenten mit dem Kühlmittel auf eben diesem Temperaturniveau versorgt werden.

Es ist nun die Aufgabe der vorliegenden Erfindung, ein System zur Kühlung einer Brennstoffzellenanlage, insbesondere einer Brennstoffzellenanlage mit einem Gaserzeugungssystem in einem Kraftfahrzeug zu schaffen, welche in der Lage ist, verschiedene zu kühlende Komponenten in einem Kühlkreislauf mit Kühlmittel auf unterschiedlichen Temperaturniveaus zu versorgen.

Erfindungsgemäß wird diese Aufgabe durch die im Anspruch 1 genannten Merkmale gelöst.

Die erfindungsgemäße Lösung sieht dabei in dem Kühlkreislauf wenigstens zwei Ventileinrichtungen vor, welche jeweils in Abhängigkeit der Temperatur, in einem einer jeweiligen Komponente zugeordneten Bereich, hinsichtlich ihrer Durchflussmenge beeinflußbar sind. Damit kann erreicht werden, daß über jede der Ventileinrichtungen, welche jeweils einer der zu kühlenden Komponente oder einer Gruppe von zum jeweils gleichen Zeitpunkt des Betriebs der Brennstoffzellenanlage auf einem gleichen oder einem ähnlichen Temperaturniveau gekühlt werden sollte, zugeordnet ist, können mit einem Kühlkreislauf verschiedene Temperaturniveaus zur Verfügung gestellt werden.

Damit ergibt sich der Vorteil, daß beispielsweise die Brennstoffzelle, welche eine vergleichsweise lange Dauer nach dem Start der Brennstoffzellenanlage benötigt bis sie die ideale Arbeitstemperatur erreicht hat, zum Beginn des Betriebs der Brennstoffzellenanlage auf einem sehr viel höheren Temperaturniveau gekühlt wird, als die weiteren Komponenten und Hilfsaggregate, wie beispielsweise zu kühlende Elektronik-Bauteile, Motoren, Pumpen oder dergleichen, welche bereits zum Beginn des Betriebs der Brennstoffzellenanlage die volle Kühlleistung erfordern.

In einer besonders günstigen Weiterbildung der Erfindung ist der Kühlkreislauf dabei in der Art aufgebaut, daß jeweils eine Bypassleitung um den Kühler und um wenigstens eine der zu kühlenden Komponenten angeordnet ist, wobei die Ventileinrichtungen jeweils so wirken, daß durch sie das Verhältnis der Durchflussmengen durch den Kühler bzw. die zu kühlende Komponente und durch die jeweilige Bypassleitung beeinflußbar ist.

Somit kann auf sehr einfache und effektive Weise, nämlich anhand des Verhältnisses der Durchflussmengen durch die zu kühlenden Komponente bzw. den Kühler und die jeweilige Bypassleitung, erreicht werden, daß einerseits das Temperaturniveau in dem Kühlkreislauf an sich unabhängig der Temperatur steuerbar bzw. regelbar ist, und daß andererseits über den Bypass der zu kühlenden Komponente das Temperaturniveau in dieser Komponente unabhängig vom Rest des Kühlkreislaufes nochmals gesteuert bzw. geregelt werden kann.

Dabei ist es selbstverständlich nicht möglich, das Temperaturniveau in diesem Bereich nochmals abzusenken, die übliche Anwendung sieht jedoch auch vor, daß die entsprechenden Komponenten, beispielsweise in der Startphase der Brennstoffzellenanlage, nicht die gleiche hohe Kühlleistung erfordert wie im regulären Betrieb derselben.

Somit läßt sich also über die erste der Ventileinrichtungen und über die Bypassleitung um den Kühler ein Grundtemperaturniveau für den gesamten Kühlkreislauf einstellen, wobei sich über die zweite Ventileinrichtung und die Bypassleitung um die zu kühlende Komponente, beispielsweise um die Brennstoffzelle selbst, ein höheres Temperaturniveau einstellen läßt. Nach dem Starten der Brennstoffzellenanlage kann so sehr schnell eine ideale Kühlung aller Komponenten auf dem zu diesem Zeitpunkt idealen Temperaturniveau gewährleistet werden. Eine bedarfsorientierte Kühlung der jeweiligen Komponenten zu jedem Zeitpunkt wird damit in besonders vorteilhafter Weise ermöglicht.

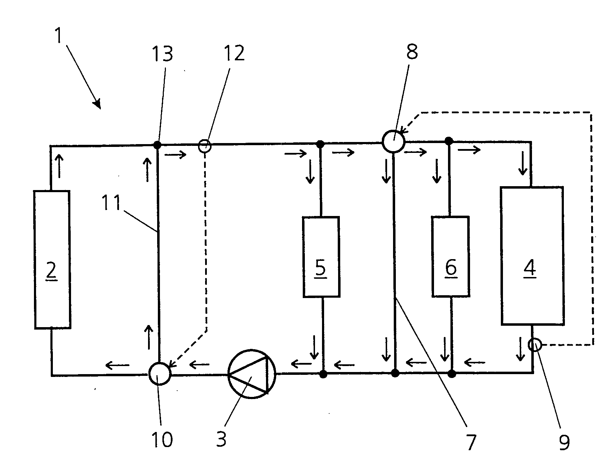

Weitere vorteilhafte Ausgestaltungen der Erfindung ergeben sich aus den weiteren Unteransprüchen und dem anhand der Zeichnung nachfolgend dargestellten Ausführungsbeispiel.

Die einzige beigefügte Figur zeigt einen Kühlkreislauf 1, welcher einen Kühler 2, eine Kühlmittelfördereinrichtung 3 und eine Brennstoffzelle 4 als eine der zu kühlenden Komponenten aufweist. Außerdem sind in dem Kühlkreislauf 1 weitere zu kühlende Komponenten mittels der prinzipmäßig durch das Bezugszeichen "5" angedeuteten Komponente dargestellt. Bei diesen zu kühlenden Komponenten kann es sich insbesondere um Hilfsantriebe, zu kühlende Elektronik-Bauteile, zu kühlende Elektromaschinen oder dergleichen handeln.

Die Komponente 5 muß dabei nicht, wie hier prinzipiell dargestellt, als einzelne Komponente 5 ausgebildet sein, sondern sie kann auch als eine Gruppe von Komponenten 5 ausgebildet sein, welche in dem Kühlkreislauf 1 entweder in einer parallelen oder in einer seriellen Verschaltung oder in einer Mischform davon angeordnet sind.

Das Bezugszeichen "6" symbolisiert eine weitere zu kühlende Komponente in dem Kühlkreislauf 1. Diese zu kühlende Komponente 6 soll dabei insbesondere für die Kühlung der Brennstoffzelle 4 zugeführten Brenngase ausgebildet sein und wird daher im folgenden als Reformatkühler 6 bezeichnet.

Der in der einzigen beiliegenden Figur dargestellte Aufbau zeigt, daß eine Bypassleitung 7 in der Art ausgebildet ist, daß über eine Ventileinrichtung 8, welche in einer besonders günstigen Ausführungsform als elektrisch betätigbarer Proportionalventil ausgebildet ist, das Verhältnis der Durchflussmengen, durch die Brennstoffzelle 4 und den Reformatkühler 6 einerseits und die Bypassleitung 7 andererseits über diese Ventileinrichtung 8 eingestellt werden kann.

Damit läßt sich im Bereich der Brennstoffzelle 4 und des Reformatkühlers 6 ein entsprechendes Temperaturniveau erreichen. Die Steuerung bzw. Regelung der Ventileinrichtung 8 erfolgt dabei anhand der Daten eines Temperatursensors 9, welcher in Strömungsrichtung des Kühlmittels, diese ist über zahlreiche Pfeile in der Figur angedeutet, hinter der Brennstoffzelle 4 angeordnet ist. Der Reformatkühler 6 und die Brennstoffzelle 4 können dabei problemlos zu einer zu kühlenden Komponente bzw. Einheit zusammengefaßt werden, da die Anforderungen bezüglich der Kühlleistung an diese beiden Komponenten hinsichtlich des erforderlichen Temperaturniveaus und des zeitlichen Verlaufs die gleichen sind.

Um das Temperaturniveau in dem Kühlkreislauf 1 an sich beeinflussen zu können, ist eine weitere Ventileinrichtung 10 im Bereich einer Bypassleitung 11 um den Kühler 2 vorgesehen. Über diese Ventileinrichtung 10, welche in besonders günstiger und einfach zu realisierender Weise ebenfalls als elektrisch ansteuerbares Proportionalventil ausgebildet ist, kann das Durchflußverhältnis durch den Kühler 2 und die Bypassleitung 11 zur Umgehung des Kühlers eingestellt werden. Damit läßt sich das Temperaturniveau in dem Kühlkreislauf 1 an sich beeinflussen. Ein Temperatursensor 12 ist dazu in einem Bereich in Strömungsrichtung des Kühlmittels nach dem Zusammenfluß 13 des von dem Kühler 2 kommenden Kühlmittels und des durch die Bypassleitung 11 kommenden Kühlmittels angeordnet. Der Temperatursensor 12 ermittelt also die Mischtemperatur aus den beiden genannten Volumenströmen, welche gleichzeitig die Temperatur ist, welche sich in dem Kühlkreislauf 1 an sich einstellt, und welche dann lediglich durch die andere Ventileinrichtung 8 im Bereich der Brennstoffzelle 4 nochmals beeinflußbar wird.

Mit dem Kühlkreislauf 1 wird mit dieser sich im Bereich des Temperatursensors 12 einstellenden Temperatur neben der genannten Kombination aus Bypassleitung 7, Reformatkühler 6 und Brennstoffzelle 4 insbesondere der Aufbau der zu kühlenden Komponenten 5, also der Elektronik-Bauteile, Motoren und dergleichen, gekühlt.

Da die zu kühlenden Komponenten 5 bereits unmittelbar nach dem Start der Brennstoffzellenanlage die volle Kühlleistung benötigen, kann das Kühlmittel über die Ventileinrichtung 10 und die Bypassleitung 11 sehr schnell auf dieses geforderte Temperaturniveau hochgeheizt werden, wobei dann die bedarfsorientierte Kühlung der zu kühlenden Komponenten 5 auf eben diesem Temperaturniveau erfolgt. Die Brennstoffzelle 4, welche nach dem Start der Brennstoffzellenanlage eine weitaus höhere Zeit benötigt, ehe sie ihre Betriebstemperatur erreicht hat, wird über die Ventileinrichtung 8 die entsprechende Bypassleitung 7 in der Art mit Kühlmittel versorgt, daß sich hier ein höheres Temperaturniveau einstellt und sich die Brennstoffzelle 4 selbst schneller aufheizt.

Mit dem Aufbau kann also eine bedarfsorientierte und damit energieoptimierte Kühlung der Brennstoffzellenanlage bei entsprechend wenigen Einzelkomponenten des Kühlkreislaufs in einem sehr kompakten und effizienten Aufbau vorgenommen werden.

## Patentansprüche

1. System zur Kühlung einer Brennstoffzellenanlage, insbesondere einer Brennstoffzellenanlage mit einem Gaserzeugungssystem in einem Kraftfahrzeug, mit einem in einem Kühlkreislauf zirkulierenden Kühlmittel, mit wenigstens einem Kühler (2), mit wenigstens einer Kühlmittelfördereinrichtung (3) und mit wenigstens einer weiteren zu kühlenden Komponente (5) außer der Brennstoffzelle (4), wobei der Kühlkreislauf (1) wenigstens zwei Ventileinrichtungen (8,10) aufweist, welche jeweils einer der zu kühlenden Komponenten (4,5) zugeordnet sind, und durch welche eine Durchflussmenge des Kühlmittels durch die jeweils zu kühlende Komponente (4,5) in Abhängigkeit der Temperatur in jeweils einem einer der Komponenten (4,5) zugeordneten Bereich beeinflußt wird.

2. System nach Anspruch 1,
**dadurch gekennzeichnet, daß**
der Kühlkreislauf (1) jeweils eine Bypassleitung (7,11) um den Kühler (2) und um wenigstens eine der zu kühlenden Komponenten (4) aufweist, wobei die Ventileinrichtungen (8,10) jeweils so angeordnet sind, daß durch sie das Verhältnis der Durchflussmengen durch den Kühler (4)/die Komponente (5) und durch die jeweilige Bypassleitung (7,11) beeinflußt wird.

3. System nach Anspruch 2,
**dadurch gekennzeichnet, daß**
ein Sensor (12) zum Erfassen der Temperatur, in deren Abhängigkeit die der Bypassleitung (11) um den Kühler (2) zugeordnete Ventileinrichtung (10) betätigbar ist, in Strömungsrichtung des Kühlmittels nach dem Zusammenfluß (13) der aus dem Kühler (2) und aus der Bypassleitung (11) kommenden Volumenströme des Kühlmittels angeordnet ist.

4. System nach Anspruch 1 oder 2,
**dadurch gekennzeichnet, daß**
ein Sensor (9) zum Erfassen der Temperatur, in deren Abhängigkeit die der Bypassleitung (7) um die wenigstens eine der zu kühlenden Komponenten (4) zugeordnete Ventileinrichtung (8) betätigbar ist, in Strömungsrichtung des Kühlmittels nach der wenigstens einen Komponente (4) angeordnet ist.

5. System nach Anspruch 2, 3 oder 4,
**dadurch gekennzeichnet, daß**
die eine Bypassleitung (7) als Bypass um die Brennstoffzelle (4) und direkt mit ihr korrespondierende zu kühlende Komponenten (6) ausgebildet ist.

6. System nach Anspruch 5,
**dadurch gekennzeichnet, daß**
die direkt mit der Brennstoffzelle (4) korrespondierenden zu kühlende Komponenten (6) als die Kühlung des in die Brennstoffzelle (4) eintretenden Brenngases ausgebildet sind.

7. System nach einem der Ansprüche 1 bis 6,
**dadurch gekennzeichnet, daß**
die weiteren zu kühlenden Komponenten (5) die elektrischen und mechanischen Hilfsaggregate der Brennstoffzellenanlage sind.

8. System nach einem der Ansprüche 1 bis 7,
**dadurch gekennzeichnet, daß**
die Ventileinrichtungen (8,10) als Proportionalventile ausgebildet sind.

9. System nach Anspruch 8,
**dadurch gekennzeichnet, daß**
die Proportionalventile elektrisch betätigbar sind.
